# EUROPÄISCHE PATENTSCHRIFT

(11) **EP 2 094 802 B1**
(45) Veröffentlichungstag und Bekanntmachung des Hinweises auf die Patenterteilung: **21.11.2012**
(21) Anmeldenummer: 07821373.3
(22) Anmeldetag: 16.10.2007
(51) Int. Cl.: C09J 123/00, C09J 125/06, C09J 133/00, C09J 167/00, C09J 177/06

(54) **FORMTEILE AUS SCHMELZKLEBSTOFFEN**
MOLDED PARTS FROM HOT MELT ADHESIVES
ÉLÉMENTS MOULÉS EN COLLES FUSIBLES

(30) Priorität: 29.11.2006 DE 102006056660; 30.04.2007 DE 102007020652
(43) Veröffentlichungstag der Anmeldung: 02.09.2009
(73) Patentinhaber: Henkel AG & Co. KGaA, 40589 Düsseldorf (DE)
(72) Erfinder: KOPANNIA, Siegfried, 47809 Krefeld (DE); FRIESE, Carsten, 40219 Düsseldorf (DE); SCHÖNFELD, Rainer, 40221 Düsseldorf (DE)
(86) Internationale Anmeldenummer: PCT/EP2007/061007
(87) Internationale Veröffentlichungsnummer: WO 2008/064950

(56) Entgegenhaltungen:
- EP-A- 0 504 957
- EP-A- 0 824 140
- EP-A- 0 965 627
- EP-A- 1 013 694
- DE-A1- 10 032 817

## Beschreibung

Die Erfindung betrifft Formteile, die auf Metall- oder Kunststoffsubstraten verklebt werden können und unter anderem zum Befestigen von Leitungen oder Rohren dienen können.

Formteile aus verschiedenen Materialien sind bekannt. Beispielsweise sind auch Formteile auf Basis von Polyamiden bekannt. Die EP 1 533 331 beschreibt Polyamide auf Basis von C₄-C₁₈-Dicarbonsäuren und Diaminen als Formmasse zur Herstellung von Formteilen im Niederdruckspritzgußverfahren. Als Verwendung wird beschrieben, dass in solche flüssigen Schmelzklebstoff-Formteile andere Formteile, wie Kabel, Kabelsteckverbindung, Kontakthülsen usw., eingegossen werden können und so eine feste mechanische Verbindung ergeben.

Weiterhin ist die EP 0 586 450 bekannt. Diese beschreibt Schmelzklebstoffe, unter anderem aus Polyamid, die einen bestimmten Schmelzbereich aufweisen. Mit solchen aufgeschmolzenen Schmelzklebstoffen können dann Kabel oder Steckverbindungen vergossen werden. Diese ergeben dabei eine verklebte und abgedichtete Umhüllung der Steckverbindung.

Aus der EP 0 504 957 sind Formteile aus Aluminium bekannt, die als Befestigungsvorrichtung für andere Gegenstände dienen können. Diese Aluminiumbefestigungen sind auf der Unterseite mit einem Schmelzklebstoff versehen, der fein gepulverte Eisenpartikel enthält.

Die DE 102 16 948 beschreibt ein Verfahren zum Verbinden von zwei Konstruktionsteilen, wobei beide Konstruktionsteile mit einem Verbindungsmittel zusammengefügt werden, wobei das Verbindungsmittel eine elektrische leitfähige Komponente aufweist, sowie eine zweite Komponente aus einem thermoplastischen Kunststoff. Die leitfähige Verbindung kann durch eine Induktionsspule erwärmt werden und führt danach zu einem Verbinden der beiden Konstruktionsteile. Analog sind in der DE 100 32 817 Befestigungselemente beschrieben, die auf einer Seite mit einem elektrisch leitfähigen Klebstoff beschichtet sind, der aus einem thermoplastischen Bindemittel sowie elektrisch leitfähigen Partikeln besteht, die zum Schmelzen für das thermoplastische Bindemittel dienen.

Die EP 0965627 beschreibt Schmelzklebstoffe auf Basis von Polyamiden, die eine lange offene Zeit aufweisen sollen. Weiterhin wird ein Verfahren zum Kleben von Substraten beschrieben, wobei der Schmelzklebstoff auf ein Substrat aufgetragen wird, dieses mit einem zweiten Substrat verbunden wird und der aufgeschmolzene Klebstoff abkühlt. Es werden keine besonderen selbsttragenden Formkörper beschrieben. Weiterhin wird nicht beschrieben, dass ein Formkörper an einer Fläche aufgeschmolzen werden kann und so ohne Zwischenschalten einer Klebstoffschicht verklebt werden kann.

Der bekannte Stand der Technik geht davon aus, dass Formteile aus Metall oder duroplastischem Material mit einem Schmelzklebstoff umhüllt und vergossen werden. Auf der anderen Seite werden Metall- oder Kunststoffformteile auf einer Seite beschichtet und das Formteil auf dieser Seite mit einem zweiten Substrat beispielsweise einem flächigen Metallsubstrat verklebt. Die Verwendung von duroplastischen Formteilen oder metallischen Formteilen, die verklebt werden sollen, führt regelmäßig zu dem Problem, dass ein Klebstoff gewählt werden muss, der auf beiden Substraten eine gute Haftung aufweist. Diese muss auch unter höherer Temperaturbelastung oder unter mechanischer Beanspruchung der Substrate, beispielsweise durch Vibration bestehen bleiben.

Eine weitere Anforderung an das Verkleben liegt darin, dass das Zusammenfügen in einem kurzen Zeitraum geschehen soll, danach soll eine hohe Haftung entstehen. Dafür sind Schmelzklebstoffe geeignet, die durch Kristallisation eine Haftung aufbauen. Reaktive Klebstoffe weisen häufig eine längere Reaktionszeit auf, bevor sie eine endgültige Verklebung hervorrufen.

Ausgehend von dem Stand der Technik bestand die Aufgabe, ein Formteil als Befestigungselement herzustellen, das eine schnelle Verklebung auf den Substraten erlaubt, das keine mehrfachen Haftungsflächen des Klebstoffs zu Substraten aufweist, und das eine ausreichende Elastizität aufweist, um eine Festigkeit auch bei erhöhten Temperaturen oder bei erhöhter mechanischer Belastung sicher zu stellen.

Die Aufgabe wird entsprechend Anspruch 1 gelöst. Dabei wird ein Formteil zur Verfügung gestellt, das aus Schmelzklebstoffen besteht, die eine hohe Erweichungstemperatur aufweisen. Der Schmelzklebstoff soll eine hohe Elastizität und eine Streckspannung von 1 bis 35 MPa aufweisen.

Die Erfindung betrifft weiterhin ein Verfahren zum Verkleben von Formteilen aus Schmelzklebstoffen, das eine schnelle und sichere Applikation auf verschiedenen Substraten ermöglicht.

Als Substrate können eine Vielzahl von bekannten Substraten eingesetzt werden. Insbesondere bestehen diese Substrate aus Kunststoff oder aus Metall, es können jedoch auch andere Substrate, wie z.B. Holz oder Holzwerkstoffe, Stein oder Beton, Glas oder Keramik, eingesetzt werden. Die Substrate sind im wesentlichen hart. Dünne flächige Substrate aus Metall oder Kunststoff, wie z.B. Blech oder Kunststoffteile als geformte Teile, sind aber insbesondere geeignet. Üblicherweise handelt sich jedoch nicht um Folien.

Die erfindungsgemäßen Formteile können eine beliebige Form aufweisen. Eine Seite soll so geformt sein, dass die Formteile als Befestigungsvorrichtung eingesetzt werden können. Beispielsweise ist es möglich auf dieser Seite eine oder mehrere Haltevorrichtungen vorzusehen. Beispiele für solche Haltevorrichtungen sind Gewinde, Clipse, Klammern oder auch Durchführungen. Diese Haltevorrichtungen sind direkt aus dem Material der Formteile geformt. Diese dienen dazu, das zu befestigende Teil direkt festzuhalten, sie können jedoch auch benutzt werden, um auf dem Formteil eine Befestigungsvorrichtung anzubringen. Das wird im allgemeinen nach der Verklebung auf dem Substrat geschehen.

Das Formteil enthält mindestens eine Fläche, die zum Verkleben mit der Substratoberfläche ausgebildet ist. Diese muss eine Grundfläche aufweisen, die ausreicht, eine sichere Haftung des Formteils auf dem Substrat zu ermöglichen. Die Verbindungsfläche kann verschiedene Formen aufweisen, insbesondere ist sie eben. Sie kann jedoch auch bei strukturierten Substraten der Form der Substratoberfläche angepasst werden. Bevorzugt ist eine Klebefläche vorhanden. Es ist jedoch auch möglich, um die Klebefläche zu vergrößern oder aus konstruktiven Gründen, zwei Klebeflächen vorzusehen. Diese können in Anpassung an die Substratflächen ausgebildet sein.

Die erfindungsgemäßen Formteile sollen aus Schmelzklebstoffen bestehen. Es kann sich dabei um reaktive oder um nicht reaktive Schmelzklebstoffe handeln. Solche Schmelzklebstoffe können beispielsweise auf Basis von Polyestern, Polyurethanen, Polyolefinen, Polyacrylaten oder Polyamiden bestehen.

Schmelzklebstoffe auf der Basis von Polyestern sind beispielsweise in der EP 028687 beschrieben. Es handelt sich dabei um Umsetzungsprodukte aus aliphatischen, cycloaliphatischen oder aromatischen Dicarbonsäuren, die mit aliphatischen cyclischen oder aromatischen Polyolen umgesetzt werden können. Durch Auswahl der Carbonsäuren und der Polyole können kristalline oder teilkristalline Polyester erhalten werden. Üblicherweise werden Dicarbonsäuren und Diole miteinander zur Reaktion gebracht. Es ist jedoch auch möglich, dass anteilsweise Tricarbonsäuren oder Triole eingesetzt werden.

In der EP 434467 oder der DE 4128274 werden thermoplastische Polyurethane als Schmelzklebstoffe beschrieben. Es handelt sich dabei um Umsetzungsprodukte von Polyolen mit Polyisocyanaten, die ggf. einen erhöhten Modul aufweisen. Als Polyole können die an und für sich bekannten Polyole auf Basis von Polyethern, Polyestern, Polyacrylaten, Polybutadienen, Polyole auf Basis von pflanzlichen Rohstoffen, wie oleochemische Polyole, eingesetzt werden. Um eine gute Reaktivität zu erzielen, sind üblicherweise zumindest anteilig aromatische Isocyanate enthalten. Durch Auswahl der Polyole und/oder Isocyanate können die Eigenschaften des Prepolymeren beeinflusst werden, beispielsweise der Schmelzpunkt, die Elastizität oder die Haftung. Es sind aber auch reaktive thermoplastische Polyurethane geeignet, die dann nach Applikation ggf. auch dauerhaft vernetzen können.

Weiterhin sind auch Schmelzklebstoffe auf Basis von Polymerisaten bekannt, wie beispielsweise Polyolefinen. Es handelt sich dabei um amorphe, kristalline oder teilkristalline Polyolefine. Beispiele dafür sind Polypropylen oder Polyethylencopolymere. Die Eigenschaften solcher Polymere können über ihr Molekulargewicht und über die einpolymerisierten Comonomere beeinflusst werden. Solche Schmelzklebstoffe sind zum Beispiel in der WO 2004/039907 beschrieben, wobei es sich in diesem Fall um durch Metallocen-Katalyse hergestellte Polymere handelt.

Weitere geeignete Schmelzklebstoffe können beispielsweise Polyamide sein. Geeignete Polyamide sind beispielsweise in der EP 749463 beschrieben. Es handelt sich dabei um Polyamidschmelzklebstoffe auf Basis von Dicarbonsäuren und Polyetherdiaminen. Besonders geeignete Schmelzklebstoffzusammensetzungen sind in der EP 204 315 beschrieben. Es handelt sich dabei um Polyesteramide, die auf Basis von Polymerfettsäuren und Polyaminen hergestellt werden.

Beispielsweise können als erfindungsgemäß geeignete Polyamide solche auf Basis von Dimerfettsäure-freien Polyamiden ausgewählt werden. Diese sind herstellbar aus
- 40 bis 50 mol %, vorzugsweise 50 mol %, einer oder mehrerer C₄-C₁₈- Dicarbonsäure(n)
- 5 bis 45 mol %, vorzugsweise 15 bis 40 mol %, mindestens eines aliphatischen Diamines
- 5 bis 40 mol %, vorzugsweise 20 bis 30 mol %, eines oder mehrerer cycloaliphatischer Diamine
- 0 bis 40 mol %, vorzugsweise 5 bis 25 mol % Polyetherdiaminen,
wobei die Summe der eingesetzten Diamine ca. 50 mol % ergibt, so dass Dicarbonsäurekomponente und Diaminkomponente in etwa equivalenten molaren Mengenanteilen vorliegen.

Dabei werden die Dicarbonsäuren vorzugsweise in bis zu 10 % stöchiometischen Überschuß gegenüber den Diaminen eingesetzt, so dass Carboxyl - terminierte Polyamide entstehen. Das Molekulargewicht der erfindungsgemäß zu verwendenden Polyamide beträgt etwa 10 000 bis 50 000, vorzugsweise 15 000 bis 30 000. Diese erfindungsgemäß geeigneten Polyamide haben eine Viskosität zwischen 5000 und 60 000 mPas, vorzugsweise zwischen 15000 und 50 000 mPas (gemessen bei 200°C, Brookfield Thermosel RVT, EN ISO 2555).

Beispiele für Dicarbonsäuren zur Herstellung der erfindungsgemäßen Polyamide sind insbesondere Adipinsäure, Azelainsäure, Bernsteinsäure, Dodecandisäure , Glutarsäure, Korksäure (Suberinsäure), Maleinsäure, Pimelinsäure, Sebacinsäure, Undecandisäure oder deren Mischungen.

Die Diamin-Komponente besteht im wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Konkrete Beispiele sind Ethylendiamin, Diethylentriamin, Dipropylentriamin, 1,4-Diaminobutan, 1,3-Pentandiamin, Methylpentandiamin, Hexamethylendiamin, Trimethylhexamethylendiamin, 2-(2-aminomethoxy)ethanol, 2-Methypentamethylenediamin, C₁₁-Neopentandiamin, Diaminodipropylmethylamin, 1,12-Diaminododecan. Die besonders bevorzugten aliphatischen Diamine sind C₄-C₁₂-Diamine mit einer geraden Anzahl an C-Atomen.

Die Amino-Komponente kann weiterhin cyclische Diamine oder heterocyclische Diamine enthalten wie zum Beispiel 1,4-Cyclohexandiamin, 4,4'-Diaminodicyclohexylmethan, Piperazin, Cyclohexan-bis-(methylamin), Isophorondiamin, Dimethylpiperazin, Dipiperidylpropan, Norbornan-diamin oder m-Xylylendiamin. Wenn das Polyaminoamid eine höhere Flexibilität aufweisen soll, können zusätzlich noch Polyoxyalkylendiamine wie zum Beispiel Polyoxyethylendiamine, Polyoxypropylendiamine oder Bis-(di-aminopropyl)-polytetrahydrofuran mit verwendet werden. Dabei sind die Polyoxyalkylendiamine besonders bevorzugt. Ihr Molekulargewicht liegt zwischen 200 und 4000 g/mol.

Weiterhin können Aminocarbonsäuren oder deren cyclische Derivate mit verwendet werden. Beispielhaft erwähnt sein hier 6-Aminohexansäure, 11-Aminoundecansäure, Laurolactam, ε-Caprolactam.

Eine weitere Ausführungsform der erfindungsgemäß geeigneten Schmelzklebstoffe enthält als wesentliche Komponente ein Polyamid auf der Basis von dimerisierter Fettsäure. Dimerisierte Fettsäuren werden durch Kupplung von ungesättigten langkettigen einbasischen Fettsäuren, z.B. Linolensäure, Ölsäure, erhalten. Die Säuren sind seit langem bekannt und im Handel erhältlich.

Die erfindungsgemäßen Polyamide sind beispielsweise zusammengesetzt aus
- 35 bis 49,5 Mol-% dimerisierte Fettsäure sowie
- 0,5 bis 15 Mol-% monomere Fettsäure mit 12 bis 22 C-Atomen und
- 2 bis 35 Mol-% Polyetherdiamine der allgemeinen Formel

   H2N - R5 - O - (R60)x - R7 - NH2, (I)

   in der
   - x: eine Zahl zwischen 8 und 80, insbesondere zwischen 8 und 40, R5 und R7 gleiche oder verschiedene aliphatische und/oder cycloaliphatische Kohlenwasserstoffreste mit vorzugsweise 2 bis 8 C-Atomen und
   - R6: einen gegebenenfalls verzweigten aliphatischen Kohlenwasserstoffrest mit 1 bis 6 C-Atomen darstellen, sowie
- 15 bis 48 Mol-% aliphatische Diamine mit 2 bis 40 C-Atomen, wobei die dimerisierten Fettsäuren bis zu 65 % durch aliphatische Dicarbonsäuren mit 4 bis 12 Kohlenstoffatomen ersetzt werden können.

Eine andere geeignete Zusammensetzung ist erhältlich aus
- 20 bis 49,5 Mol-% dimerisierter Fettsäure sowie
- 0,5 bis 15 Mol-% monomere Fettsäure mit 12 bis 22 C-Atomen und
- 20 bis 55 Mol-% eines wenigstens 2 primäre Aminogruppen tragenden Amins mit 2 bis 40 C-Atomen,
wobei der Anteil der dimerisierten Fettsäuren bis zu 65 % durch aliphatische Dicarbonsäuren mit 4 bis 12 Kohlenstoffatomen ersetzt sein können.

Bezüglich der Aminkomponenten in den Polyamiden sind bevorzugt Polyetherpolyole mit primären Aminoendgruppen geeignet, wie oben bereits aufgeführt. Dabei sind Polyetherpolyole mit Aminoendgruppen bevorzugt, die nicht oder nur geringfügig wasserlöslich sind. Die eingesetzten Polyetherpolyole mit Aminoendgruppen weisen insbesondere Molekulargewichte zwischen 700 und 2 500 g/mol auf. Eine besonders geeignete Rohstoffklasse sind beispielsweise die Bis-(3-aminopropyl)-polytetrahydrofurane.

Weiterhin können insbesondere auch primäre Alkylendiamine mit 2 bis 10 C-Atomen eingesetzt werden, ausgewählt aus den oben angegebenen Aminen.

Eine weitere geeignete Klasse von Diaminen leitet sich von den Dimerfettsäuren ab und enthält statt der Carboxylgruppen primäre Aminogruppen. Derartige Substanzen werden häufig Dimerdiamine genannt. Sie werden durch Nitrilbildung aus den dimerisierten Fettsäuren und anschließende Hydrierung erhalten.

Als Carbonsäuren sind die oben angeführten aliphatische Dicarbonsäuren einsetzbar. Geeignete aliphatische Carbonsäuren weisen vorzugsweise 4 bis 12 C-Atome auf. Durch diese Säuren kann Dimerfettsäure molmäßig bis zu 65 % ersetzt werden. Weiterhin einsetzbar sind langkettige Aminocarbonsäuren wie 11-Aminoundecansäure oder auch Lauryllactam.

Dabei ist es dem Fachmann bekannt, dass durch Zusatz von Sebacinsäure der Schmelzpunkt der Polyamide in gewissen Grenzen erhöht werden kann. In kleinen Mengen können auch die in der Faserchemie bekannten Polyamid-Rohstoffe wie beispielsweise Caprolactam eingesetzt werden. Diese Stoffe erlauben es dem Fachmann, den Schmelzpunkt in gewissen Grenzen zu erhöhen.

Bei der Auswahl der einzusetzenden monofunktionellen, difunktionellen oder trifunktionellen Rohstoffe ist zu berücksichtigen, dass schmelzbare, d.h. nicht vernetzte Produkte erhalten werden. Beispielsweise kann beim Auftreten von Vernetzungen / Vergelungen durch Absenken des Anteils an trifunktionellen Komponenten (Trimerfettsäuren) und/oder Erhöhen des Gehalts an monofunktionellen Aminen oder Fettsäuren zu Polymeren gelangt werden, die nicht zur Vergelung neigen.

Allgemein werden die Mengen der Amin und der Carbonsäuren so gewählt, dass die Polyamide Carboxylgruppen in einer Menge von 1-120 meq/kg Festkörper aufweisen, insbesondere zwischen 10 bis 100 meq/kg. Alternativ kann auch mit einem Überschuss an Aminen gearbeitet werden, dann soll ein Amingehalt zwischen 1 - 140 meq/kg Festköper erhalten werden, insbesondere zwischen 10 bis 100 meq/kg. Das Molekulargewicht (gemessen als zahlenmittleres Molekulargewicht, wie über GPC erhältlich) kann zwischen 30000 und 300000 g/mol betragen, insbesondere zwischen 50000 und 150000 g/mol. Die Viskosität der Polyamide soll zwischen 5000 und 100000 mPas betragen (gemessen bei 200°C) , insbesondere bis zu 50000 mPas.

Eine bevorzugte Ausführungsform setzt als Schmelzklebstoff Polyamide ein in einer Menge von 60 bis 100 Gew.-%. Die weiteren Schmelzklebstoffpolymere können die oben genannte Polyurethane, Polyacrylate oder Polyester sein. Diese müssen der auch in der Schmelze mit dem Polyamid verträglich sein, d.h. eine stabile homogene Schmelze bilden. In einer besonderen Ausführungsform können 35 bis 15 Gew.-% eines Poly(meth)acrylatpolymere enthalten sein. Dieses kann beispielsweise aus Alkylacrylatmonomeren bestehen, ggf. können weiter Comonomere enthalten sein, beispielsweise Ethylen, Propylen, Styrol, oder funktionalsierte Monomere. Insbesondere sollen diese Poly(meth)acrylate polare Gruppen aufweisen, beispielsweise OH-, COOH-Gruppen oder Carbonsäureanhydridgruppen.

Eine andere Ausführungsform setzt nur Polyamide als Schmelzklebstoffbasispolymer ein.

Weiterhin können die erfindungsgemäß geeigneten Schmelzklebstoffe weitere übliche Zusätze enthalten. Beispiele dafür sind klebrig machende Harze, wie z.B. Abietinsäure, Abietinsäureester, Terpenharze, Terpenphenolharze oder Kohlenwasserstoffharze; Füllstoffe , z.B. Silikate, Talk, Calciumcarbonate, Tone, Ruß oder Pigmente; Antioxidantien oder Stabilisatoren, z.B. vom Typ der sterisch gehinderten Phenole oder der aromatischen Aminderivate; faserförmige Additive, wie natürliche Fasern, Kunststoff- oder Glasfasern. Die Antioxidantien können dabei in Mengen bis zu 1,5 Gew.% bezogen auf das Polymere eingesetzt werden. Allgemein sollen diese Zusätze als Summe nicht mehr als 10 Gew.-% in einem erfindungsgemäßen Schmelzklebstoff enthalten sein.

Eine weitere erfindungswesentliche Eigenschaft der geeigneten Schmelzklebstoffe ist es, das diese eine hohe Elastizität und eine hohe Festigkeit aufweisen müssen. Diese Festigkeit kann durch die Streckspannung (gemessen nach EN ISO 527-1) charakterisiert werden. Erfindungsgemäß ist es notwendig, dass die Streckspannung (bei Raumtemperatur) zwischen 1 und 35 MPa beträgt, insbesondere von 3 bis 20 MPa. Die Reißfestigkeit liegt höher, sie soll zwischen 1 bis 50 MPa betragen, insbesondere zwischen 10 bis 40 MPa. Dabei kann die Reißdehnung bei 200 bis 1000 % liegen. Ist die Reißfestigkeit zu gering, ist die mechanische (Form)-Stabilität des erfindungsgemäßen Formteils nicht ausreichend. Damit ist es möglich, dass unter einer mechanischen Belastung des Formteils durch das zu haltende Teil dieses sich verformt oder bricht.

Eine weitere wichtige Eigenschaft ist die, dass der Schmelzklebstoff des Formteils eine Erweichungstemperatur (gemessen nach ASTM E 28) von oberhalb von 100°C aufweisen soll, insbesondere oberhalb von 150°C. Dabei kann die Temperatur bis zu 250°C betragen, insbesondere bis zu 220°C. Die Auswahl von Schmelzklebstoffen mit entsprechender Erweichungstemperatur ist von den zu verklebenden Substraten abhängig. Sind die Substrate für das zu verklebende Formteil thermisch weniger belastbar, beispielsweise Holz oder Kunststoffsubstrate, ist es möglich, auch einen Schmelzklebstoff mit niedrigerer Erweichungstemperatur als Formteil einzusetzen. Ist eine hohe Belastbarkeit des Substrats gegeben, ist es günstig, dass der Schmelzklebstoff einen höheren Erweichungspunkt aufweist. Damit ist eine verbesserte Standfestigkeit des verklebten Formteile auf dem Substrat gegeben, insbesondere bei erhöhter Temperaturbelastung.

Die erfindungsgemäßen Formkörper können auf bekannte Art und Weise hergestellt werden. Beispielsweise werden diese im Spritzgussverfahren hergestellt. Dabei kann der Schmelzklebstoff in eine geeignete Form eingespritzt werden, die ggf. an der zu Verklebung vorgesehene Fläche mögliche elektrisch leitende Bestandteile aufweist, die so mit dem Formkörper verbunden werden.

Eine andere Arbeitsweise arbeitet so, dass ein two-shot Verfahren angewandt wird. Dabei wird ein Teil der Form mit einem erfindungsgemäß geeigneten Schmelzklebstoff gefüllt, der verbleibende Teil wird mit einer Mischung aus Schmelzklebstoff und geeigneten leitenden Pigmenten oder Pulvern gefüllt. So können besonders geeigneten Formkörper hergestellt werden, die induktiv an der Klebefläche erwärmt werden können.

Es ist bekannt, Formen zum Herstellen solcher Formteile mit einer Anit-Haft-Beschichtung zu versehen. Ggf. ist es ebenso möglich, dass die Oberfläche der Formteile mit einem Mittel zur Verminderung der Haftung versehen wird. Damit kann der Herstellungsprozess vereinfacht werden.

Erfindungsgemäß ist es vorteilhaft, wenn das Formteil auf oder in der zum Verkleben mit der Substratoberfläche ausgebildeten Fläche zusätzlich elektrisch leitfähige Bestandteile enthält. Unter diesen elektrisch leitfähigen Bestandteilen sind beispielsweise perforierte Metallfolien, Metalldrähte, Metallpulver, andere leitfähige Pulvermaterialien, wie Ferritpulver, Ceroxide oder Leitfähigkeitsruße zu verstehen. Solche Pulver können aus den bekannten Metallen bestehen, beispielsweise Fe, Co, Ni, Cu, Al, Zn, Sn oder deren Legierungen. Insbesondere eignen sich Materialien, die induktiv erwärmbar sind, besonders Metall oder Ferritteilchen in Form von Pulvern, Drähten oder Netzen. Dabei sollen solche Bestandteile nicht in dem ganzen Formteil vorliegen, nur an den zur Verklebung vorgesehenen Flächen. Eine Ausführungsform hat diese Bestandteile in die zur Verklebung vorgesehene Fläche eingearbeitet, d. h. diese metallischen leitfähigen Teilchen sind von dem Schmelzklebstoff vollständig umhüllt. Dabei soll die Dicke der Schicht mit solchen Bestandteilen ungefähr der Dicke der aufzuschmelzenden Klebstoffschicht entsprechen. Eine andere Ausführungsform arbeitet so, dass solche leitfähigen Bestandteile, wie perforierten Metallfolie, Metallnetze oder Metalldrähte nur auf die Oberfläche der zur Verklebung dienenden Fläche aufgebracht werden. In diesem Falle sind die metallischen Teile nicht vollständig von dem Schmelzklebstoff umhüllt. Solche zu einem geringen Teil in dem Schmelzklebstoff eingebetteten Bestandteile sollen auch unter der Definition einbezogen sein, dass der Formkörper vollständig aus dem Schmelzklebstoff besteht. Diese Bestandteile tragen nicht zur tragenden Struktur der Formkörper bei.

Eine andere Ausführungsform weist die zum Erwärmen des Formteils vorteilhaften Bestandteile in der Nähe oder neben der zu verklebenden Fläche auf. Beispielsweise kann ein Draht, Netz oder Pulver am Umfang einer stiftförmigen Verklebungsfläche angebracht sein. Beispielsweise kann ein Netz den Umfang vollständig oder auch nur teilweise bedecken. Auch in dieser Ausgestaltungsform wird der Schmelzklebstoff an der Verklebungsfläche erwärmt und aufgeschmolzen und kann dann verklebt werden. Der Abstand der induktiv erwärmbaren Teile von der Verklebungsfläche ist so zu wählen, dass eine ausreichende Verflüssigung des Schmelzklebstoffes an der Verklebungsstelle sichergestellt wird.

Ein weiterer Gegenstand der Erfindung ist ein Verfahren zum Verkleben von solchen Formteilen aus Schmelzklebstoffen auf Substratoberflächen. Aufgrund der industriellen Anforderungen sind kurze Taktzeiten zur Verklebung zweckmäßig. Dabei wird der Formkörper aus dem Schmelzklebstoff an der zu verklebenden Oberfläche erwärmt, so dass nur an dieser Stelle ein Aufschmelzen oder ein Erweichen stattfindet. Danach wird der Formkörper auf das Substrat gepresst und durch Erstarren oder Rekristallisieren fest verbunden.

Eine erfindungsgemäße Arbeitsweise arbeitet so, dass das Formteil an der mit dem Substrat zu verklebenden Oberfläche erhitzt wird durch an sich bekannte Verfahren. Das kann beispielsweise durch Erwärmen mit heißen Gasen, mit Infrarotstrahlung oder durch Kontakt mit erwärmten Flächen geschehen. Es ist erfindungswesentlich, dass das Formteil nur an der zu verklebenden Fläche erwärmt wird. Unmittelbar nach der Erwärmung wird das Formteil auf das Substrat gepresst. Dabei kühlt der Schmelzklebstoff ab und bildet eine feste Verbindung mit dem Formteil.

Eine andere weniger bevorzugte Arbeitsweise der Erfindung arbeitet so, dass das Substrat mindestens punktuell erwärmt wird. Auf den so erwärmten Punkten wird das Formteil aufgepresst. Dabei ist darauf zu achten, dass die Erwärmung an der zu verklebenden Stelle ausreichend hoch ist, um das Formteil an der zu verklebenden Fläche aufzuschmelzen. Diese Verfahren ist insbesondere dann geeignet, wenn das Substrat ohne Zerstörung auf eine ausreichende Temperatur erwärmt werden kann.

Eine bevorzugte Ausführungsform arbeitet so, dass das Formteil an oder neben der zu verklebenden Fläche metallisch leitfähige Pulver oder Bestandteile enthält. Diese können zum Verkleben induktiv erwärmt werden, d.h. mit elektromagnetischen Feldern beaufschlagt werden. Das führt zum Erwärmen und Aufschmelzen des Schmelzklebstoffs. Der an der zu verklebenden Fläche aufgeschmolzene Klebstoff des Formteiles wird dann auf das Substrat gepresst. Im Allgemeinen wird dabei die induktive Erwärmung beendet, so dass der Schmelzklebstoff abkühlen kann und sich mit dem Substrat verbindet. Gegebenenfalls ist es jedoch möglich, auch nach dem Zusammenpressen noch für einen kurzen Zeitraum den Schmelzklebstoff des Formteils an der zu verklebenden Fläche zu erwärmen.

Der Schmelzklebstoff soll so stark erwärmt werden, dass er an das Substrat anfließen kann. Das kann ggf. durch mechanischen Druck, wie Anpressen, unterstützt werden. Beispielsweise soll die Erwärmung mindestens 20 °C, insbesondere 30 °C oberhalb des Schmelzpunkts des Klebstoffs liegen. Ein besonders schnelles Abkühlen und eine schnelle Verklebung wird beispielsweise dadurch erreicht, dass metallische Substrate verklebt werden.

Vorrichtungen zum direkte Erwärmen der Formkörper, zum induktiven Erhitzen der Formkörper und zum aufbringen der Formkörper auf das Substrat sind dem Fachmann bekannt. Dieser kann angepasste Vorrichtungen, je nach notwendiger Schmelztemperatur des Formkörpers, Taktzeit des Verklebens, Form der zu verklebenden Substrate, auswählen.

Weist das Material des erfindungsgemäß ausgestalteten Formkörpers einen zu niedrigen Schmelzpunkt auf, so ist eine temperaturstabile Verklebung nicht möglich. Insbesondere, wenn zusätzlich noch mechanische Beanspruchungen auftreten, beispielsweise Vibrationen, wird eine stabile Verklebung nicht erreicht. Die Streckspannung muss oberhalb von bevorzugt 3 MPa liegen, sonst ist keine ausreichende Haltekraft der Befestigungsvorrichtung gegeben. Ist der Wert zu hoch, so ist die Verbindung Substrat / zu befestigender Gegenstand zu starr, d.h. es werden alle mechanischen Belastungen des Substrats an den zu befestigenden Gegenstand weitergegeben.

Das erfindungsgemäße Verfahren eignet sich insbesondere dafür, um mit automatisierten Arbeitsvorgängen Formteile als Befestigungsvorrichtungen auf flächige Substrate zu verkleben, die eine in weiten Grenzen ausgestaltete Raumform besitzen. Insbesondere ist das erfindungsgemäße Verfahren geeignete Festigungsclipse oder Bolzen auf metallische Substrate, wie beispielsweise Blechsubstrate, zu verkleben. Solche verklebte Befestigungsclipse können beispielsweise in der Automobilindustrie, der Flugzeugindustrie, der allgemeinen OEM- Industrie oder im Fall von Kunststoff- oder Holzsubstraten in der Möbelindustrie usw. eingesetzt werden.

Nach dem Verkleben ist eine feste Verbindung des Formteiles mit der Substratoberfläche gegeben. Im Falle von vernetzbaren Schmelzklebstoffen als Grundmaterial des Formteiles können diese anschließend noch weiter härten und eine zusätzliche, im Allgemeinen chemisch nicht lösbare Verbindung aufbauen.

Durch die Bildung des Formteils vollständig aus Schmelzklebstoff werden stabile Befestigungen enthalten. Ein Versagen der Klebestelle ist nur an einer Fläche möglich, es werden keine weiteren Substrat/Klebstoff-Grenzflächen erzeugt. Weiterhin ist die Fertigung solcher Formteile wesentlich einfacher, als wenn metallische oder Kunststoffformteile einer Klebstoffbeschichtung versehen werden.

Die Erfindung wird durch folgende Beispiele näher erläutert:
Beispiel 1:
   Aus 50 mol% Dodecandisäure, 25 mol% Piperazin, 10 mol% Jeffamine D 400 und 15 mol% Diaminohexan wurde in an sich bekannter Weise durch Kondensationsreaktion unter Entfernung des Reaktionswassers ein Polyamid hergestellt. Kennzahlen: Säurezahl: 15 mg KOH/g, Schmelzviskosität: 17200 mPa.s bei 200°C, Erweichungspunkt: 160°C, Reißfestigkeit 15 MPa.
Beispiel 2:
   In gleicher Weise wurden aus 50 mol% Sebacinsäure, 24 mol% Piperazin, 16,5 mol% Jeffamine D 400 und 9,5 mol% Ethylendiamin, ein Polyamid hergestellt. Kennzahlen: Säurezahl: 8,2 mg KOH/g, Schmelzviskosität: 17000 mPas bei 200°C, Erweichungspunkt:175°C, Reißfestigkeit 25 MPa.
   Aus den Polyamiden nach Beispiel 1 und 2 wird ein Gegenstand in Form eines Stifts hergestellt, der ein runde Bodenfläche von 1 cm aufweist. In diese Bodenfläche wird oberflächlich durch Erwärmen ein Eisenpulver oder ein Kupfernetz eingearbeitet.
   Die Bodenflächen der Formkörper wurden induktiv erwärmt und auf verschiedene flache Substrate geklebt.
   Die Bodenflächen der Formkörper ohne Zusatz von leitfähigen Additiven werden mit einer Heißluftpistole erwärmt und verklebt.
Beispiel 3
   Aus 75 Gew.-% des Polyamid aus Beispiel 1 und 25 Gew.-% eines MSAgepfropften Ethylen-Ethylacrylat-Copolymeren wird ein Formteil hergestellt. Um die Verklebungsfläche wird ein Kupfernetz an dem halben Umfang des Stifts aufgebracht in einer Breite von 0,5 cm.
   Das Formteil wird wie in den Beispielen 1 und 2 verklebt.

Die Proben zeigen eine gute Haftung von zum Substrat.

| | | |
|---|---|---|
| Metallsubstrat | bis 10 N/mm² | (Scherfestigkeit , DIN 53283) |
| Kunststofifsubstrat | bis 10 N/mm² | |
| Holzsubstrat | bis 5 N/mm² | |

Auch bei einer Temperaturbelastung von 50°C ist die Haftung noch gut.

| | | |
|---|---|---|
| Kunststoff | bis 100 N/cm | (Schälfestigkeit , DIN 53282) |

### Vergleichsversuch:

Ein Polyamid-Kunststoff (PA 6) wird aufgeschmolzen und auf ein Metallsubstrat aufgepresst. Es ist keine Haftung gegeben.

Molmasse über 250000 g/mol ; Streckspannung ca. 50 MPa ; Reißdehnung ca. 30%.

## Patentansprüche

1. Formteil zum Verkleben auf Metall- oder Kunststoffsubstraten als Befestigungvorrichtung umfassend einen Schmelzklebstoff, wobei der Schmelzklebstoff aus Polymeren auf Basis von Polyamiden, Polyolefinen, Polyestern, Polyacrylaten oder Polystyrol besteht, **dadurch gekennzeichnet, dass** das Formteil auf einer Seite in Form von einer oder mehreren Haltevorrichtungen ausgebildet ist und der Schmelzklebstoff eine Erweichungstemperatur, gemessen nach ASTM E28, zwischen 100 °C bis 250 °C und eine Streckspannung, gemessen nach EN ISO 527-1, zwischen 1 bis 35 MPa aufweist, wobei das Formteil aus dem Schmelzklebstoff und gegebenenfalls auf oder in der zum Verkleben ausgebildeten Fläche elektrisch leitfähigen Bestandteilen besteht.

2. Formteil nach Anspruch 1, **dadurch gekennzeichnet, dass** die Erweichungstemperatur zwischen 150 °C bis 200 °C liegt und die Streckspannung zwischen 3 bis zu 20 MPa beträgt.

3. Formteile nach einem der Ansprüche 1 oder 2, **dadurch gekennzeichnet, dass** der Schmelzklebstoff ein Polyamid ist, enthaltend 20 bis 50 mol% Dimerfettsäure und/oder C₄ bis C₁₈ Dicarbonsäuren, 0 bis 15 mol% monomere Fettsäure mit C₁₂ bis C₂₂, 5 bis 50 mol% aliphatischer Polyamine, 0 bis 40 mol% cycloaliphatischer Diamine und 0 bis 35 mol% Polyetherdiamine und wobei der Schmelzklebstoff eine Viskosität bei 200 °C zwischen von 5000 bis 100000 mPas aufweist.

4. Formteil nach Anspruch 3, **dadurch gekennzeichnet, dass** das Polyamid Dimerfettsäure enthält sowie bis zu 65% bezogen auf die Dimerfettsäure an Dicarbonsäuren, mindestens 0,5 mol% monomere Fettsäuren, wobei die Summe 50 mol% betragen soll und die Viskosität bei 200 °C oberhalb von 15000 bis 50000 mPas beträgt, oder dass das Polyamid mindestens 40 mol% C₄ bis C₁₈ Dicarbonsäuren sowie keine Fettsäuren enthält, sowie ein Gemisch aus aliphatischen und cycloaliphatischen Diaminen und ggf. Polyetherdiaminen, wobei die Summe der Amine 50 mol% betragen soll.

5. Formteil nach einem 1 bis 4, **dadurch gekennzeichnet**, zusätzlich 35 bis 15 Gew.-% eines Poly(meth)acrylatcopolymer enthalten sind, wobei dieses Acrylatcopolymer polare Gruppen aufweist.

6. Formteil nach einem der Ansprüche 1 bis 5, **dadurch gekennzeichnet, dass** das Formteil mindestens eine zur Verklebung zum Substrat dienende Fläche aufweist, wobei diese Fläche durch Induktion erwärmbar Bestandteile aufweist oder neben dieser Fläche an der Oberfläche des Formteils durch Induktion erwärmbare Bestandteile vorhanden sind.

7. Formteil nach Anspruch 6, **dadurch gekennzeichnet, dass** als durch Induktion erwärmbare Bestandteile ein metallisches Netz, Vlies, Draht, perforierte Folie, insbesondere aus Al, Cu, Fe, Ni, Sn, Zn oder Legierungen enthalten ist, wobei die induktiv erwärmbaren Bestandteile in den Schmelzklebstoff eingebettet sind oder sich auf der Oberfläche des Schmelzklebstoffs befinden.

8. Formteil nach Anspruch 6, **dadurch gekennzeichnet, dass** in dieser Fläche induktiv erwärmbare pulverförmige Pigmente eingebettet sind, insbesondere Metallpulver, Metalloxidpulver, leitfähiger Ruß oder nanoskalige induktiv erwärmbare Pigmente.

9. Formteil nach Anspruch 8, **dadurch gekennzeichnet, dass** die Schichtdicke der eingebetteten induktiv erwärmbaren Bestandteile maximal der Dicke der aufzuschmelzenden Schicht entspricht und weniger als 3 mm beträgt.

10. Formteil nach einem der Ansprüche 1 bis 9, **dadurch gekennzeichnet, dass** als Befestigungsteil Clipse, Gewinde, Bohrungen, Klammern abgewandt von der zur Verklebung vorgesehenen Fläche ausgebildet sind.

11. Verfahren zum Verkleben von Formteilen auf Metall oder Kunststoffsubstraten, **dadurch gekennzeichnet, dass** das Formteil gemäß Anspruch 1 bis 10 aus einem Schmelzklebstoff ausgebildet ist und eine dem Substrat zugewandte Fläche auf eine Temperatur von mindestens 20°C oberhalb des Erweichungspunkts erwärmt wird und gleichzeitig oder unmittelbar danach auf das Substrat gepresst wird.

12. Verfahren nach Anspruch 11, **dadurch gekennzeichnet, dass** die zu verklebende Fläche mittels IR-Strahlung, Mikrowellenstrahlung, Heißluft, induktiver Heizung oder durch das Substrat erwärmt wird, insbesondere über ein induktiv erwärmbares, insbesondere metallisches Netz, Pulver oder Draht erwärmt wird.

13. Verfahren nach einem der Ansprüche 11 oder 12, **dadurch gekennzeichnet, dass** die zu verklebende Fläche innerhalb von 15 sec auf eine Temperatur größer als 30°C oberhalb des Erweichungspunkts erwärmt wird.

14. Verwendung von Schmelzklebstoffen auf Basis von Polyamiden enthaltend 20 bis 50 mol% Dimerfettsäure und/oder C₄ bis C₁₈ Dicarbonsäuren, 0 bis 15 mol% monomere Fettsäure mit C₁₂ bis C₂₂, 5 bis 50 mol% aliphatischer Polyamine, 0 bis 40 mol% cycloaliphatischer Diamine und 0 bis 35 mol% Polyetherdiamine und der Schmelzklebstoff eine Erweichungstemperatur zwischen 150°C bis 250°C und eine Streckspannung zwischen 1 bis zu 35 MPa aufweist, zum Herstellen von verklebbaren Formteilen nach einem der Ansprüche 1 bis 13 in der Automobil- oder der allgemeinen Industrie.

15. Verwendung nach Anspruch 14, **dadurch gekennzeichnet, dass** die zu verklebende Fläche durch induktive Heizung erwärmt wird.

## Claims

1. Moulded article for bonding onto metallic or plastic substrates as a fastening device comprising a hot melt adhesive, wherein the hot melt adhesive consists of polymers based on polyamides, polyolefins, polyesters, polyacrylates or polystyrene, **characterised in that** the moulded article is designed on one side in the form of one or more holding devices and the hot melt adhesive has a softening point measured according to ASTM E 28 between 100 °C and 250 °C and a yield stress measured according to EN ISO 527-1 between 1 and 35 MPa, wherein the moulded article consists of the hot melt adhesive and optionally of electrically conductive constituents on or in the surface designed for adhesive bonding.

2. Moulded article according to claim 1, **characterised in that** the softening point is between 150 °C and 200 °C and the yield stress is between 3 and 20 MPa.

3. Moulded article according to one of claims 1 or 2, **characterised in that** the hot melt adhesive is a polyamide, comprising 20 to 50 mol % dimer fatty acid and/or C₄ to C₁₈ dicarboxylic acids, 0 to 15 mol % monomeric fatty acid containing C₁₂ to C₂₂, 5 to 50 mol % aliphatic polyamines, 0 to 40 mol % cycloaliphatic diamines and 0 to 35 mol % polyether diamines and wherein the hot melt adhesive has a viscosity between 5000 and 100 000 mPas at 200 °C.

4. Moulded article according to claim 3, **characterised in that** the polyamide comprises dimer fatty acid as well as up to 65% of dicarboxylic acids, based on the dimer fatty acid, at least 0.5 mol % monomeric fatty acids, wherein the sum should add up to 50 mol % and the viscosity is greater than 15 000 up to 50 000 mPas at 200 °C, or that the polyamide comprises at least 40 mol % C₄ to C₁₈ dicarboxylic acids but no fatty acids, as well as a mixture of aliphatic and cycloaliphatic diamines and optionally polyether diamines, wherein the sum of the amines should add up to 50 mol %.

5. Moulded article according to one of claims 1 to 4, **characterised in that** in addition, 35 to 15 wt % of a poly(meth)acrylate copolymer are comprised, wherein said acrylate copolymer possesses polar groups.

6. Moulded article according to one of the claims 1 to 5, **characterised in that** said moulded article possesses at least one surface available for bonding to the substrate, wherein said surface possesses inductively heatable constituents or inductively heatable constituents are present near said surface on the surface of the moulded article.

7. Moulded article according to claim 6, **characterised in that** a metallic grid, web, wire, perforated film, in particular made of Al, Cu, Fe, Ni, Sn, Zn or alloys is comprised as inductively heatable constituents, wherein the inductively heatable constituents are embedded in the hot melt adhesive or are located on the surface of the hot melt adhesive.

8. Moulded article according to claim 6, **characterised in that** inductively heatable powdered pigments are embedded in said surface, in particular metallic powder, metal oxide powder, conductive carbon black or nanometric, inductively heatable pigments.

9. Moulded article according to claim 8, **characterised in that** the layer thickness of the embedded inductively heatable constituents corresponds at most to the thickness of the layer to be melted and is less than 3 mm.

10. Moulded article according to one of claims 1 to 9, **characterised in that** clips, threads, holes, fasteners are formed as the fastening part, facing away from the surface destined for bonding.

11. Process for bonding moulded articles onto metal or plastic substrates, **characterised in that** the moulded article is made up of a hot melt adhesive according to claim 1 to 10 and a surface facing the substrate is heated to a temperature of at least 20 °C above the softening point and is simultaneously or immediately afterwards pressed onto the substrate.

12. Process according to claim 11, **characterised in that** the surface to be bonded is heated by means of IR-radiation, microwave radiation, hot air, inductive heating or through the substrate, in particular through an inductively heatable, especially metallic grid, powder or wire.

13. Process according to one of the claims 11 or 12, **characterised in that** the surface to be bonded is heated within 15 seconds to a temperature of more than 30 °C above the softening point.

14. Use of hot melt adhesives based on polyamides comprising 20 to 50 mol % dimer fatty acid and/or C₄ to C₁₈ dicarboxylic acids, 0 to 15 mol % monomeric fatty acid containing C₁₂ to C₂₂, 5 to 50 mol % aliphatic polyamines, 0 to 40 mol % cycloaliphatic diamines and 0 to 35 mol % polyether diamines and wherein the hot melt adhesive has a softening point between 150 °C and 250 °C and a yield stress between 1 and 35 MPa, for manufacturing adhesively bondable moulded articles according to one of claims 1 to 13 in the automobile industry or the general industry.

15. Use according to claim 14, **characterised in that** the surface to be adhesively bonded is heated by means of inductive heating.

## Revendications

1. Élément moulé à coller sur des substrats métalliques ou en matière synthétique à titre de dispositif de fixation comprenant un adhésif thermofusible, l'adhésif thermofusible étant constitué par des polymères à base de polyamides, de polyoléfines, de polyesters, de polyacrylates ou de polystyrène, **caractérisé en ce que** l'élément moulé est réalisé sur un côté sous la forme d'un ou de plusieurs dispositifs de maintien et l'adhésif thermofusible présente une température de ramollissement, mesurée conformément à la norme ASTM E28, entre 100 °C et 250 °C et un effort de tension, mesuré conformément à la norme EN ISO 527-1, entre 1 et 35 MPa, l'élément moulé étant constitué par l'adhésif thermofusible et de manière facultative par des constituants électroconducteurs sur ou dans la surface réalisée pour le collage.

2. Élément moulé selon la revendication 1, **caractérisé en ce que** la température de ramollissement s'élève entre 150 °C et 200 °C et l'effort de tension s'élève entre 3 et 20 MPa.

3. Éléments moulés selon l'une quelconque des revendications 1 ou 2, **caractérisés en ce que** l'adhésif thermofusible est un polyamide contenant de 20 à 50 moles % d'un acide gras dimère et/ou d'acides dicarboxyliques en C₄-C₁₈, de 0 à 15 moles % d'acides gras monomères en C₁₂-C₂₂, de 5 à 50 moles % de polyamines aliphatiques, de 0 à 40 moles % de diamines cycloaliphatiques et de 0 à 35 moles % de polyétherdiamines, et dans lesquels l'adhésif thermofusible présente une viscosité à 200 °C entre 5000 et 100.000 mPa.s.

4. Elément moulé selon la revendication 3, **caractérisé en ce que** le polyamide contient un acide gras dimère et des acides dicarboxyliques, jusqu'à 65 %, rapportés à l'acide gras dimère, et au moins 0,5 mole % d'acides gras monomères, la somme devant s'élever à 50 moles %, et la viscosité à 200 °C s'étendant d'une valeur supérieure à 15.000 jusqu'à 50.000 mPa.s, ou bien **en ce que** le polyamide contient au moins 40 moles % d'acides dicarboxyliques en C₄-C₁₈ et aucun acide gras, ainsi qu'un mélange de diamines aliphatiques et cycloaliphatiques et, de manière facultative, des polyétherdiamines, la somme des amines devant s'élever à 50 moles %.

5. Élément moulé selon l'une quelconque des revendications 1 à 4, **caractérisé en ce qu'**il contient en outre de 35 à 15 % en poids d'un copolymère de poly(méth)acrylate, ce copolymère d'acrylate présentant des groupes polaires.

6. Élément moulé selon l'une quelconque des revendications 1 à 5, **caractérisé en ce que** l'élément moulé présente au moins une surface servant pour le collage au substrat, cette surface présentant des constituants aptes à être réchauffés par induction, ou bien des constituants aptes à être réchauffés par induction étant présents à côté de cette surface sur la surface de l'élément moulé.

7. Elément moulé selon la revendication 6, **caractérisé en ce qu'**il contient, à titre de constituants aptes à être réchauffés par induction, un filet métallique, un non-tissé, un fil métallique, un film perforé, en particulier en Al, Cu, Fe, Ni, Sn, Zn ou en leurs alliages, les constituants aptes à être réchauffés par induction étant incorporés dans l'adhésif thermofusible ou bien se trouvant sur la surface de l'adhésif thermofusible.

8. Elément moulé selon la revendication 6, **caractérisé en ce que**, sont incorporés dans cette surface, des pigments pulvérulents aptes à être réchauffés par induction, en particulier de la poudre métallique, de la poudre d'oxyde métallique, du noir de carbone conducteur ou des pigments à l'échelle du nanomètre aptes à être réchauffés par induction.

9. Elément moulé selon la revendication 8, **caractérisé en ce que** l'épaisseur de couche des constituants incorporés aptes à être réchauffés par induction correspond au maximum à l'épaisseur de la couche qui doit être mise en fusion et est inférieure à 3 mm.

10. Élément moulé selon l'une quelconque des revendications 1 à 9, **caractérisé en ce qu'**on réalise, à titre d'éléments de fixation, des agrafes, des filets de vis, des alésages, des pinces qui se détournent de la surface prévue pour le collage.

11. Procédé pour le collage d'éléments moulés sur des substrats métalliques ou en matière synthétique, **caractérisé en ce que** l'élément moulé est réalisé conformément aux revendications 1 à 10 à partir d'un adhésif thermofusible, et une surface tournée vers le substrat est chauffée à une température d'au moins 20 °C au-dessus du point de ramollissement et est appliquée de manière simultanée ou directement après, par compression sur le substrat.

12. Procédé selon la revendication 11, **caractérisé en ce que** la surface à coller est chauffée au moyen d'un rayonnement infrarouge, d'un rayonnement à micro-ondes, d'air chaud, d'un chauffage par induction ou bien à travers le substrat, en particulier via un réseau métallique, une poudre ou un fil métallique apte à être réchauffé en particulier par induction.

13. Procédé selon l'une quelconque des revendications 11 ou 12, **caractérisé en ce que** la surface à coller est chauffée dans un laps de temps de 15 secondes à une température supérieure à 30 °C au-dessus du point de ramollissement.

14. Utilisation d'adhésifs thermofusibles à base de polyamides contenant de 20 à 50 moles % d'un acide gras dimère et/ou d'acides dicarboxyliques en C₄-C₁₈, de 0 à 15 moles % d'acides gras monomères en C₁₂-C₂₂, de 5 à 50 moles % de polyamines aliphatiques, de 0 à 40 moles % de diamines cycloaliphatiques et de 0 à 35 moles % de polyétherdiamines, et l'adhésif thermofusible présente une température de ramollissement qui s'élève entre 150 °C et 250 °C et un effort de tension de 1 à 35 MPa, pour la production d'éléments moulés aptes à être collés selon l'une quelconque des revendications 1 à 13 dans l'industrie automobile ou dans l'industrie en général.

15. Utilisation selon la revendication 14, **caractérisée en ce que** la surface à coller est chauffée via un chauffage par induction.
